# DEMANDE DE BREVET EUROPEEN

(11) **EP 0 978 956 A1**
(43) Date de publication de la demande: **09.02.2000**
(21) Numéro de dépôt: 99401856.2
(22) Date de dépôt: 22.07.1999
(51) Int. Cl.: H04B 7/212

(54) **Procédé d'allocation de liens entre un ensemble de zones et un ensemble de satellites**

(30) Priorité: 06.08.1998 FR 9810134
(71) Demandeur: ALCATEL, 75008 Paris (FR)
(72) Inventeur: Gaudin, Etienne, 91400 Orsay (FR); Noreils, Fabrice, 91400 Orsay (FR)
(74) Mandataire: Lamoureux, Bernard

(57) **Abrégé**

L'invention concerne un procédé pour allouer des liens entre un ensemble de zones équipées chacune d'au moins une station de connexion, et un ensemble de satellites à chaque pas de temps successifs. A cette fin, les étapes suivantes sont itérées à chaque pas de temps :
- détection sur l'ensemble des liens alloués pendant le pas de temps précédent, par un algorithme de propagation de contraintes, des liens qui doivent être interrompus et conservation des autres liens dans le nouveau plan d'allocation S(T),
- utilisation d'un algorithme d'optimisation pour allouer les liens restants tout en respectant les conditions imposées par les problèmes d'interférence.
Application aux communications par satellites.

## Description

L'invention s'applique aux communications par satellites et plus particulièrement à un système d'accès large bande utilisant une constellation de satellites en orbite basse dans le but de fournir des services large bande essentiellement dans le cadre des multimédias.

L'invention s'applique aux systèmes d'accès utilisant des satellites géostationnaires GEO mais aussi aux systèmes d'accès utilisant des satellites à basse altitude LEO (low Earth Orbit).

L'invention s'applique tout particulièrement à un nouveau système d'accès large bande qui est en cours de développement actuellement. Ce système est dénommé SkyBridge. Il permettra de mettre à la disposition des usagers du monde entier des services tels que l'accès rapide à l'Internet et la vidéoconférence. Il mettra en oeuvre une constellation de 80 satellites à basse altitude LEO qui relient, à des stations de connexion terrestres, les usagers professionnels et résidentiels équipés de terminaux peu onéreux.

On rappelle à ce propos que le système SkyBridge se compose de deux segments :
- un segment spatial : le segment spatial est constitué par 80 satellites LEO (plus les satellites de réserve), en orbite à une altitude de 1.457 km, et par le segment de contrôle au sol composé du centre de contrôle de satellite et des stations de poursuite, de télémétrie et de commande. Le segment spatial assure une couverture permanente dans la bande de latitudes de ±68°. Il relie chaque usager de SkyBridge avec la station de connexion la plus proche.
- un segment terrestre : le segment terrestre est constitué par les stations de connexion terrestres et par les terminaux d'usager. Les premières assurent l'interconnexion, via un commutateur ATM, avec des serveurs locaux et avec des réseaux terrestres à large bande et à bande étroite.

SkyBridge est un système d'accès fondé sur le mode de transfert asynchrone (ATM) qui sert à raccorder des usagers à un commutateur local. Le trafic émanant des terminaux est transmis de façon transparente par le satellite (c'est-à-dire sans d'autres traitements qu'une amplification et une transposition en fréquence) à la station de connexion et vice versa. Les stations de connexion ont des fonctions de commutation et servent d'interface aux réseaux terrestres.

La terre est découpée géographiquement en zones de rayon d'environ 350 km qui comprend jusqu'à 2.000.000 clients potentiels et une station de connexion (Gate Way) entre ces clients et les satellites de la constellation qui éclairent la zone. Cette station permet aux clients de service qui se trouvent dans cette zone de rentrer en communication avec la constellation.

De manière générale, les satellites d'une constellation en orbite basse défilent et peuvent éclairer une zone géographique z ainsi définie au minimum pendant quelques minutes et au maximum pendant une vingtaine de minutes.

Le système d'accès doit malgré tout assurer un certain débit entre la constellation et les points fixes que forment les stations de connexion dans cet environnement.

Pour cela, il est nécessaire d'optimiser les ressources dont on dispose à bords de chaque satellite. Il faut en effet trouver une affectation des ressources aux points au sol pour que les services proposés puissent être fournis et répondent bien aux demandes des clients.

Les ressources pour un satellite sont données par le nombre d'antennes ou de faisceaux ponctuels multiplié par le nombre de canaux (ressource fréquentielle) dont chaque satellite peut disposer dans la bande de fréquence réservée au système d'accès.

Pour augmenter le nombre de bandes de fréquence utilisables dans la bande réservée au système, il est connu d'utiliser le fait que l'on peut émettre selon une polarisation ou selon une autre polarisation (ce qui double en pratique le nombre de bandes de fréquence de la bande réservée au système). Mais cela oblige quand même à ne pas utiliser le même canal pour des zones voisines.

Cependant il est alors nécessaire de résoudre le problème d'interférences entre ondes lors de l'usage d'une même bande de fréquence pour des zones voisines et pour éviter tout brouillage. En effet l'usage de la même bande de fréquence pour des zones voisines, (c'est-à-dire des zones adjacentes ou proches), provoque un brouillage qui diminue le rapport signal à bruit de l'onde reçue.

Dans le nouveau système dénommé Skybridge, les antennes sont des antennes orientables. Ces antennes seront des antennes mobiles dont l'orientation est à commande mécanique.

Chaque satellite éclaire une région de 3.000 km de rayon. Un satellite peut produire simultanément jusqu'à 45 faisceaux ponctuels.

Comme les satellites se déplacent, les stations de connexions au sol doivent à chaque instant commuter le trafic vers un nouveau satellite de manière transparente pour les utilisateurs.

Lorsqu'un lien satellite-station au sol est établi on le maintient pendant toute la durée de visibilité de la zone dans laquelle se trouve la station au sol, par le satellite.

Les plans d'allocation au sol établis pour une période donnée doivent tenir compte de tous les aspects dynamiques de ce nouveau système tout en apportant une bonne qualité de service. Pour apporter cette qualité de service à l'exploitant du réseau il est préférable de maintenir le même lien le plus longtemps possible. Car chaque changement de lien qui est toutefois transparent pour les utilisateurs, nécessite des signaux de synchronisation entre la station de connexion et l'utilisateur. Ces communications sont des signaux de synchronisation et non de l'information utile (communication de l'utilisateur), elles induisent une réduction en bande passante pour l'exploitant du réseau.

C'est ce problème de continuité des liens que la présente invention permet de résoudre en premier lieu.

La présente invention permet d'apporter une bonne qualité de service à l'exploitant du réseau et au final à l'utilisateur en augmentant la durée d'un lien tout en satisfaisant toutes les demandes malgré tous les aspects dynamiques du système liés au fait que les antennes sont orientables.

La présente invention donc pour objet un procédé pour allouer des liens entre un ensemble de zones au sol équipées chacune d'au moins une station de connexion, et un ensemble de satellites, à chaque pas de temps successifs, les étapes suivantes étant itérées pour chacun desdits pas de temps :
- détecter sur l'ensemble des liens alloués pendant le pas de temps précédent, par un algorithme de propagation de contraintes, les liens qui doivent être interrompus et conserver les autres liens dans le nouveau plan d'allocation,
- utiliser un algorithme d'optimisation pour allouer les liens restants tout en respectant les conditions imposées par les problèmes d'interférence.

Selon une autre caractéristique de l'invention, l'algorithme de propagation de contraintes mis en oeuvre pour la détection comprend les étapes suivantes :
- fixer au pas de temps T les liens alloués au pas T-1,
- supprimer les liens impossibles définis par les variables d'entrée connues pour le nouveau plan du pas de temps T,
- déterminer l'ensemble des zones Zi restantes pour lesquelles les demandes sont non satisfaites.

Selon une autre caractéristique, l'algorithme d'optimisation pour allouer des liens entre l'ensemble des zones Zi restantes et l'ensemble des satellites N éclairant ces zones, les dits liens étant déterminés par un canal, comporte les étapes suivantes, ces étapes étant itérées pour chaque canal k possible et pour chaque satellite q:
- construire un graphe d'interférence,
- utiliser ledit graphe par un algorithme de recherche associé à un algorithme de propagation de contraintes assurant la vérification des capacités.

La construction du graphe comporte les étapes suivantes :
à un instant dt, au cours duquel un satellite q couvre Nz zones et dispose de A faisceaux Fi (i = 1 à A) et NFp canaux possibles, k = 1 à NFp
- construire le graphe pour ce satellite q dans lequel chaque noeud du graphe correspond à une zone Zi (i = 1 à Nz) telle que le nombre de canaux demandés CD pour cette zone est supérieur au nombre de canaux alloués CA,
- mettre à jour le graphe par le retrait ou l'ajout d'une zone au fur et à mesure de l'allocation de liens.

Selon une autre caractéristique, l'algorithme de recherche met en oeuvre les étapes suivantes :
- calculer un coefficient d'interférence Ci,j pour chaque couple de zones Zi, Zj du graphe pour un canal k,
- comparer la somme des coefficients Ci,j d'interférence pour chaque zone Zi à un seuil prédéterminé I maximum d'interférence acceptable,
- créer une partition P d'au plus A éléments, A correspondant au nombre de faisceaux, qui comporte Np zones Zi (i = 1 à Np) telle que pour chaque zone la somme des coefficients Ci,j ne dépasse pas le seuil I prédéterminé.

L'itération pour chaque canal k et pour chaque satellite q consiste à réitérer toutes les étapes du procédé pour un autre canal k jusqu'au dernier canal possible k = NFp, puis à réitérer l'ensemble des étapes précédentes pour un autre satellite q jusqu'au dernier satellite q = N.

D'autres caractéristiques et avantages de l'invention apparaîtront à la lecture de la description qui est faite ci-après et qui est donnée à titre d'exemple non limitatif en regard des dessins sur lesquels :
- la figure 1, représente sous forme graphique, le procédé selon l'invention,
- la figure 2, représente les étapes mises en oeuvre pour la détection,

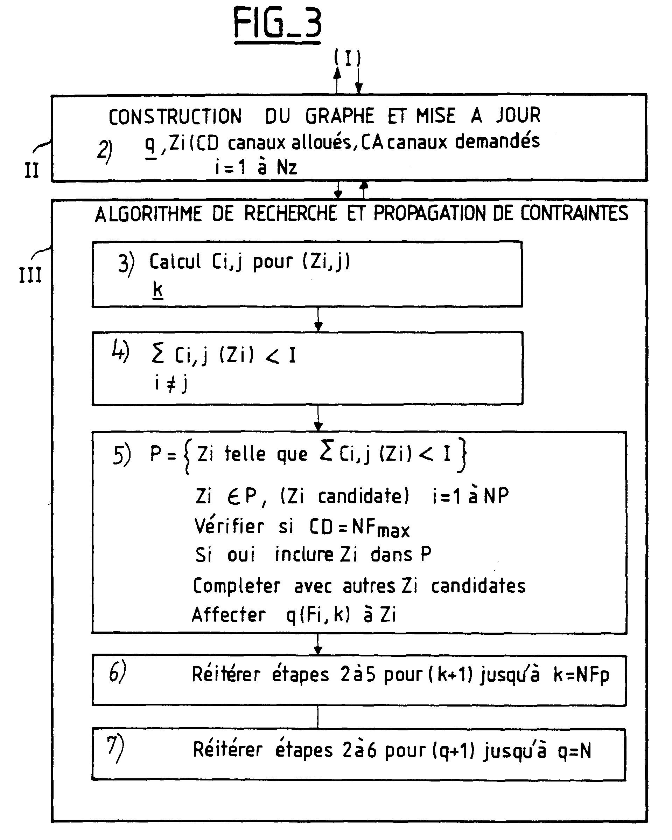

- la figure 3, représente les étapes mises en oeuvre par l'algorithme d'optimisation.
- la figure 4, représente un schéma illustrant l'empreinte au sol d'un satellite et le graphe d'interférence correspondant.

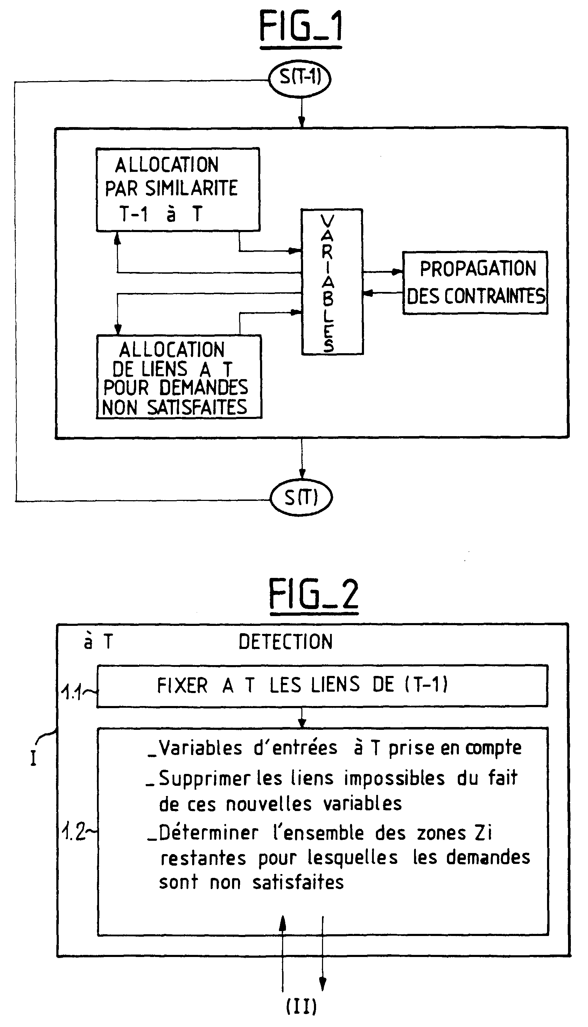

Selon l'invention on considère au pas de temps T les liens établis au pas de temps T-1 et on cherche à les maintenir. Le plan d'allocation S(T-1) à T-1 est repris à T et cela de façon itérative comme l'indique la boucle S(T-1)→ S(T) de la figure 1.

Cependant, des variables du domaine considéré ont été modifiées lorsque l'on passe de T-1 à T. En particulier, certains satellites ne sont plus visibles pour une zone donnée.

En outre, la demande à satisfaire pour une zone donnée n'est pas forcément la même lorsque l'on passe de T-1 à T. Ces changements introduisent par conséquent certaines impossibilités pour le plan d'allocation à définir au pas de temps par rapport au plan défini à T-1.

On considère donc chaque lien établi pour T-1 et on les fixe à l'instant T.

Certains liens seront non fixés en définitive à cause des changements qui viennent d'être évoqués et par conséquent les demandes d'un certain nombre de zones restent non satisfaites.

Il faut donc détecter si l'on peut fixer un lien ou si l'on ne peut pas le fixer :

Plusieurs cas possibles se présentent :
- le satellite n'est plus visible par certaines zones. Cette information est une donnée d'entrée connue à l'initialisation. Les liens entre ces zones et ce satellite ne peuvent pas être repris.
- Sur certaines zones il faut absolument affecter un lien particulier. C'est le cas par exemple pour une zone qui n'est éclairée que par un satellite. Sa demande doit alors être entièrement satisfaite par ce satellite et le nombre de canaux correspondant à cette demande doit alors être réservé à cette zone sur des faisceaux de ce satellite.

Pour satisfaire les zones non satisfaites on va utiliser un algorithme d'optimisation décrit dans la suite avec des conditions initiales pour cet algorithme qui tiennent compte du fait que des zones sont déjà satisfaites, les liens peuvent dès lors être repris à T (c'est à dire maintenus).

Cet algorithme d'optimisation comporte la construction d'un graphe (étape II), et la mise en oeuvre d'un algorithme de recherche utilisant ce graphe (étape III) .

Pour toutes les zones Zi pour lesquelles les demandes sont non satisfaites on reprend chaque satellite et chaque ressource et on construit une partition P.

Beaucoup de faisceaux sont déjà orientés du fait de la reprise de certains liens. Dans les partitions que l'on va créer on va savoir quelle zone est déjà affectée à un satellite donné. Il y a moins de combinaisons possibles que lorsque l'on part de conditions initiales où toutes les variables zone, satellite, ressources sont à zéro. L'algorithme de recherche démarre avec des conditions initiales données par la situation établie à T-1.

Pour réaliser la détection de liens repris et non repris, on fixe l'ensemble des liens utilisés précédemment c'est à dire à T-1. On calcule les coefficients d'interférence pour chaque zone Zi. On calcule la somme des coefficients Ci,j pour une zone donnée Zi, on s'aperçoit que le seuil d'interférence I est maintenant atteint ou dépassé pour certaines zones. Dans ce cas, les liens correspondants ne peuvent pas être conservés car si on gardait ces liens cela générerait trop de brouillage sur les zones concernées. Ces zones ne peuvent donc pas être satisfaites.

- Il faut alors fixer d'autres liens pour les zones Zi non satisfaites et vérifier cependant lorsqu'un lien est affecté à une zone Zi si ce lien n'est pas le seul lien possible pour une autre zone Zj. Si c'est la cas, le lien doit être affecté à la zone Zj et non Zi.

Ainsi, au pas de temps T, on parcourt tous les liens établis à T-1 que l'on va essayer d'affecter par similarité (étape 1.1, figure 2).

A cette fin, on remet à jour les variables, qui sont de nouvelles données d'entrée à T et qui permettent de détecter des impossibilités parmi les liens déjà affectés. Certaines de ces impossibilités entraînent une propagation de contraintes (des obligations d'affectations de certains liens) (étape 1.2, figure 2).

On met en oeuvre ensuite l'algorithme d'allocations de liens optimisés pour de nouveaux liens pour les demandes non satisfaites.

Selon un mode préféré de réalisation cet algorithme comprend les étapes suivantes :
- on alloue des liens entre un ensemble de zones Zi au sol et un ensemble de N satellites, les-dits liens sont déterminés par un canal, comprenant les étapes suivantes, ces étapes étant itérées pour chaque canal k possible et pour chaque satellite q:
   - on construit un graphe d'interférence,
   - on utilise ledit graphe par un algorithme de recherche associé à un algorithme de propagation de contraintes assurant la vérification des capacités.

Pour cela on considère l'ensemble des zones visibles d'un satellite. Parmi les zones Zi visibles au pas de temps T-1, certaines ne le sont plus et sont exclues.

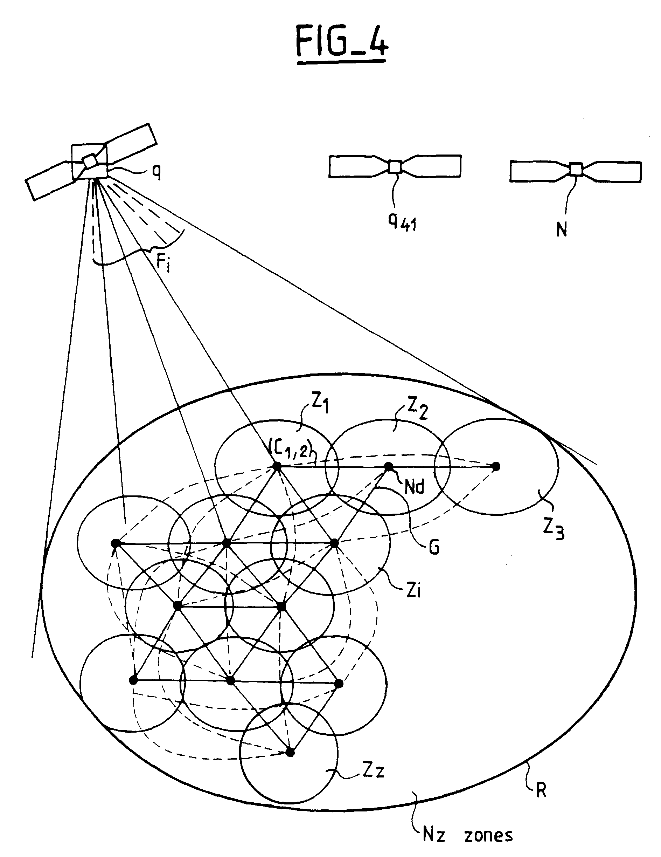

2- le graphe (cf figure 4) est tel que chaque noeud Nd correspond à une zone Zi (Z₁ à Z_{Nz}) telle que son nombre de canaux demandé CD est supérieur au nombre de canaux alloués CA (CD et CA étant des données d'entrée pour la construction du graphe) .

Un satellite q couvre à un instant donné Nz zones et dispose de A faisceaux Fi et de NFp canaux possibles susceptibles de satisfaire la demande pour cette zone.

On connaît pour une zone quelle est sont besoin en trafic, c'est-à-dire quel est le nombre de canaux demandés CD. En effet, ce nombre est déduit dès lors que l'on a fixé un seuil I maximun d'interférence acceptable ou seuil de brouillage.

On connaît aussi le nombre de canaux alloués CA par le plan établi au pas de temps T-1.

Le graphe est mis à jour par le retrait ou l'ajout d'une zone au fur et à mesure de l'allocation de liens.

L'algorithme de recherche consiste, pour un satellite q et pour un canal k donné, à déterminer le plus grand nombre possible de zones Zi vers lesquelles on peut orienter un faisceau Fi en allouant à ce faisceau le canal k.

A cette fin on opère les étapes suivantes :
3- on calcule le coefficient d'interférence Ci,j pour chaque couple de zones (Zi, Zj) du graphe pour un canal k, k = 1 à NFp (nombre de canaux possibles). Ce coefficient est calculé au moyen d'une méthode connue classique. Il s'agit d'un calcul du rapport signal à bruit dans les conditions les plus mauvaises de réception, c'est-à-dire lorsque l'on émet avec un même niveau de puissance et la même bande de fréquence vers toutes les zones. On peut dès lors se fixer un seuil maximum d'interférence acceptable I.
4- on compare la somme des coefficients Ci,j d'interférence pour chaque zone Zi au seuil fixé I.
   Ainsi pour une zone Zi on effectue le calcul : somme Ci,j que l'on compare à I (i différent de j).
5- on crée alors une partition P d'au plus A éléments, A étant le nombre de faisceaux disponibles, chaque zone de la partition étant pointée par un des faisceaux. Ceci permet de définir un lien pour les zones de la partition:
   - on prend une zone Zi candidate (i = 1 à Np) de la partition P,
   - on vérifie si le nombre de canaux demandés CD pour cette zone, est égal au nombre maximun de canaux NFmax pour cette zone, si c'est le cas, alors on inclus cette zone dans la partition,
   - on complète la partition par les autres zones candidates c'est à dire les zones Zi pour lesquelles cette vérification est négative mais pour lesquelles la somme des coefficients Ci,j ne dépasse pas le seuil I.
6- on réitère les étapes de construction du graphe (étape 2) jusqu'à l'itération sur toutes les zones de la partition (étape 5) pour un autre canal k, (k = 1 à NFp)
7- on réitère toutes les étapes précédentes pour le N-1 autres satellites.

L'affectation d'un nouveau lien peut entraîner de nouvelles contraintes. Si, lorsqu'un nouveau lien est affecté, la demande de la zone est satisfaite, alors il faut supprimer la zone de la partition pour tous les satellites (mise à jour du graphe).

Après avoir itéré pour tous les satellites et toutes les ressources (étapes 6 et 7 ), on dispose du nouveau plan S(T) d'affectation pour le pas de temps T.

## Revendications

1. Procédé pour allouer des liens entre un ensemble de zones équipées chacune d'au moins une station de connexion, et un ensemble de satellites à chaque pas de temps successifs, les étapes suivantes étant itérées pour chacun desdits pas de temps :
- détecter sur l'ensemble des liens alloués pendant le pas de temps précédent, par un algorithme de propagation de contraintes, les liens qui doivent être interrompus et conserver les autres liens dans le nouveau plan d'allocation S(T),
- utiliser un algorithme d'optimisation pour allouer les liens restants tout en respectant les conditions imposées par les problèmes d'interférence.

2. Procédé pour allouer des liens selon la revendication 1, l'algorithme de propagation de contraintes mis en oeuvre pour la détection comprend les étapes suivantes:
- fixer au pas de temps T les liens alloués au pas T-1 du plan d'allocation S(T-1) précédent,
- supprimer les liens impossibles, définis par les variables d'entrée connues pour le nouveau plan du pas de temps T,
- détermine l'ensemble des zones Zi restantes pour lesquelles les demandes sont non satisfaites.

3. Procédé selon la revendication 1, caractérisé en ce que l'algorithme d'optimisation pour allouer des liens entre l'ensemble des zones Zi restantes et l'ensemble des satellites N éclairant ces zones, les dits liens étant déterminés par un canal, comporte les étapes suivantes, ces étapes étant itérées pour chaque canal k possible et pour chaque satellite q:
- construire un graphe d'interférence,
- utiliser ledit graphe par un algorithme de recherche associé à un algorithme de propagation de contraintes assurant la vérification des capacités.

4. Procédé pour allouer des liens selon la revendication 3, caractérisé en ce que la construction du graphe comporte les étapes suivantes :
à un instant dt, au cours duquel un satellite q couvre Nz zones et dispose de A faisceaux Fi (i = 1 à A) et NFp canaux possibles, k = 1 à NFp
- construire le graphe pour ce satellite q dans lequel chaque noeud du graphe correspond à une zone Zi (i = 1 à Nz) telle que le nombre de canaux demandés CD pour cette zone est supérieur au nombre de canaux alloués CA,
- mettre à jour le graphe par le retrait ou l'ajout d'une zone au fur et à mesure de l'allocation de liens.

5. Procédé pour allouer des liens selon la revendication 3, caractérisé en ce que l'algorithme de recherche met en oeuvre les étapes suivantes :
- calculer un coefficient d'interférence Ci,j pour chaque couple de zones Zi, Zj du graphe pour un canal k,
- comparer la somme des coefficients Ci,j d'interférence pour chaque zone Zi à un seuil prédéterminé I maximum d'interférence acceptable.
- créer une partition P d'au plus A éléments, A correspondant au nombre de faisceaux, qui comporte Np zones Zi (i = 1 à Np) telle que pour chaque zone la somme des coefficients Ci,j ne dépasse pas le seuil I prédéterminé.

6. Procédé pour allouer des liens selon la revendication 3, selon lequel l'itération pour chaque canal k et pour chaque satellite q consiste à réitérer toutes les étapes du procédé pour un autre canal k jusqu'au dernier canal possible k = NFp, puis à réitérer l'ensemble des étapes précédentes pour un autre satellite q jusqu'au dernier satellite q = N.
